# EUROPÄISCHE PATENTSCHRIFT

(11) **EP 2 910 677 B1**
(45) Veröffentlichungstag und Bekanntmachung des Hinweises auf die Patenterteilung: **25.05.2016**
(21) Anmeldenummer: 14156215.7
(22) Anmeldetag: 21.02.2014
(51) Int. Cl.: D06P 5/28, A43B 13/18, A43B 13/38, B29D 35/12, A43B 13/04

(54) **Bedruckte schaumkunststoff-schuheinlegesohlen-rohlinge**
Printed shoe insole blanks of foamed plastic material
Semelles de chaussures imprimées en matière synthétique expansée

(43) Veröffentlichungstag der Anmeldung: 26.08.2015
(73) Patentinhaber: Spannrit Schuhkomponenten GmbH, 63801 Kleinostheim (DE)
(72) Erfinder: Katzer, Roland, 63801 Kleinostheim (DE)
(74) Vertreter: Erhardt, Martin

(56) Entgegenhaltungen:
- EP-A1- 1 842 441
- WO-A1-2004/106082
- WO-A1-2012/110113
- CN-A- 1 173 431
- CN-U- 202 378 398
- JP-A- S5 579 124
- JP-A- H06 122 285
- US-A1- 2005 241 186

## Beschreibung

Die Erfindung betrifft Schaumkunststoff-Schuheinlegesohlen-Rohlinge, die mit einem SchäumVerfahren hergestellt werden. Die Erfindung betrifft insbesondere PU-SchaumkunststoffEinlegesohlen, welche im RIM-Verfahren hergestellt wurden, oder insbesondere Schaumkunststoff-Einlegesohlen, die EVA aufgeschäumt wurden. Die Erfindung betrifft weiter orthopädische Schuheinlegesohlen-Rohlinge aus Schaumkunststoff, welche nach einem oder weiteren Bearbeitungsschritten als Schuheinlegesohlen Verwendung finden.

Die die Erfindung betreffenden PU-Schuheinlegesohlen-Rohlinge werden bevorzugt im Schäumverfahren aus einem Polyol und einem Cyanat, welche in einer Schäumform zusammengebracht werden, durch Ausschäumen einer Schäumform erzeugt. Die aus der Ausschäumform entnommenen Schuheinlegesohlen-Rohlinge, insbesondere aus PU- oder EVA-Schaumkunststoff sind im Allgemeinen nach dem Schäumen ein- oder zweifarbig. Wurde in die Ausschäumform zuvor ein Einlegeteil bzw. ein Kernteil eingelegt, welches dann im Schäumverfahren angeschäumt wurde, so kann dieses Kernteil nach Entnahme des Rohlings aus der Ausschäumform ebenfalls sichtbar sein, wodurch beispielsweise eine unterschiedliche Farbgebung erzielt werden kann. Im Allgemeinen haben derartig hergestellte Schuheinlegesohlen-Rohlinge nach Entnahme aus der Ausschäumform kein besonders ansprechendes Erscheinungsbild, geschweige denn eine verkaufsfördernde Optik. Meist sehen diese Rohlinge roh und unfertig aus. Dass ein solches schlichtes und einfaches Erscheinungsbild keinen zusätzlichen Kaufanreiz bietet, versteht sich von selbst.

Zur Verbesserung des Tragekomforts und/oder des Erscheinungsbildes werden die Schuheinlegesohlen-Rohlinge daher meist auf ihrer Oberseite mit einer Decke versehen, damit die Schuheinlegesohle bzw. der Einlegesohlen-Rohling ein hochwertigeres Erscheinungsbild erhält. Diese Decken können unterschiedliche Dekors und Materialen aufweisen.

Aus DE 20 2005 018 920 U1 sind Schuhsohlen, insbesondere Schuhaußensohlen, aus PU-Vollmaterial oder PU-Verbundwerkstoffen bekannt, die während eines Schmelzvorganges (Heißgießvorganges) mit einer Thermotransferschicht zum Erzeugen eines Dekors schmelzverbunden werden. Die Thermotransferschicht ist beispielsweise aus thermoplastischen Polyurethan (TPU), das sich mit der PU-Schmelze gut verbindet.

DE 100 32 546 A1 beschreibt ein Verfahren zum Bedrucken von Leder, beispielsweise für Schuhe, bei dem das Leder zunächst mit selbst aushärtenden Polymeren beschichtet wird, bevor über ein Thermotransferdruckverfahren Farbe auf die Beschichtung aufgetragen wird.

CN 202 378 398 U beschreibt eine automatische Innensohlen-Transferdruck-Maschine. Mittels dieser automatischen Innensohlen-Transferdruck-Maschine wird ein Transferdruckklebefilm auf eine Oberfläche beispielsweise einer Innensohle heiß aufgepresst. Die Innensohlen müssen hierzu flach und eben sein, da sowohl der Unterlagetisch, wie auch der Prägestempel ebene Pressflächen aufweisen. Dreidimensional ausgebildete Oberflächen können mit der beschriebenen Innensohlen-Transferdruck-Maschine nicht bedruckt werden.

US 2005/0241186 A1 zeigt ein Herstellverfahren für Einlegesohlen-Rohlinge, bei dem ein thermisch verformbarer, bereits bedruckter Film mit einem Schaummaterial angeschäumt wird. Der thermoverformbare Film wird so angeschäumt, dass das Schaummaterial unter dem thermoplastischen Film angeordnet ist, sodass das zuvor aufgebrachte Dekor nicht mit dem Schaumkunststoffmaterial in Berührung kommt.

Andere Verfahren zum Bedrucken von Schuheinlegesohlen-Rohlingen sind sehr aufwendig und daher oftmals nicht wirtschaftlich.

Der vorliegenden Erfindung liegt daher die Aufgabe zugrunde, einen Schuheinlegesohlen-Rohling bereitzustellen, der auf einer Oberseite ein Fußbett aufweist und mit einem bedruckten Dekor versehen ist, welches einfach und wirtschaftlich auf den Schuheinlegesohlen-Rohling aufgebracht werden kann. Weiterhin soll die Erfindung die Aufgabe lösen, dass das Dekor dauerhaft mit dem Material des Schuheinlegesohlen-Rohlings verbunden ist. Darüber hinaus soll erreicht werden, dass eine bedruckte Oberfläche des Schuheinlegesohlen-Rohlings eine ansprechende Haptik d. h. einen guten Tragekomfort für den Träger des Schuhs, in den der Schuheinlegesohlen-Rohling eingelegt werden soll, aufweist. Darüberhinaus soll das Dekor abriebfest mit dem Schaumkunststoff verbunden sein sowie eine hygienische Oberfläche bilden, die auch leicht gereinigt werden kann.

Diese Aufgaben werden mit einem Schaumkunststoff-Schuheinlegesohlen-Rohling nach Anspruch 1 gelöst. Weitere bevorzugte Ausführungsformen sind in den von Anspruch 1 anhängigen Unteransprüchen angegeben.

Erfindungsgemäß wird ein Schaumkunststoff-Schuheinlegesohlen-Rohling mit einer Oberseite, die als Fußbett ausgebildet ist, und einer Unterseite, direkt auf der Oberseite und/oder der Unterseite, die durch den Schaumstoff ausgebildet ist/sind, unmittelbar mittels Thermotransferdruckverfahren bedruckt. Erfindungsgemäß wird hierbei der Rohling nach dem Schäumen, d. h. nach dem formgebenden Herstellungsprozess mittels Thermotransferdruckverfahren, welches auch als Sublimationsdruck-Verfahren bezeichnet wird, dekorativ aufgewertet. Hierzu wird die zu bedruckende Fläche beispielsweise die Oberseite und/oder die Unterseite mit sogenanntem Thermotransferpapier bedeckt, welches mit geeigneten Farbstoffen - die dem Fachmann bekannt sind - versehen ist. Das auf dem Thermotransferpapier vorhandene Muster ist dabei seitenverkehrt auf das Thermotransferpapier aufgebracht, wobei die farbabgebende Seite des Thermotransferpapiers zur bedruckenden Schaumkunststoff-Oberfläche des Schuheinlegesohlen-Rohlings weist. In einem nächsten Schritt wird die Transferpapierbahn oder auch Sublimationsdruckfolie mittels einer Presse auf den Schuhsohlen-Rohling gedrückt und gleichzeitig erwärmt. Dies erfolgt beispielsweise mit einem erwärmbaren Leisten. Durch das Erhitzen des Sublimationspapiers werden die Farbstoffe auf den Schuheinlegesohlen-Rohling transferiert, wodurch dieser mit dem gewünschten Muster eingefärbt wird. Gleichzeitig wird die Oberfläche des Schaumkunststoffs versiegelt, wodurch der Rohling eine angenehmere Haptik erhält. Oberflächenrauhigkeiten werden dabei geglättet, was zu einer hygienisch unbedenklichen Oberfläche führt.

Sollen bestimmte Bereiche der Schaumkunststoff-Schuheinlegesohlen-Rohlinge nicht bedruckt werden, so kann man ein vorgeformtes Stück Papier oder einen anderen folienartigen Gegenstand zwischen dem Farbtransferpapier und dem Schaumkunststoff-Schuheinlegesohlen-Rohling auf die zu bedruckende Schaumkunststoffoberfläche legen, damit dieser Bereich optisch hervorgehoben wird, entweder durch Nicht-Bedrucken oder durch Bedrucken mit einem anderen Muster. Selbstredend kann das vorgeformte Stück Papier auch selbst ein Thermotransferfarbträger sein, um so in ausgewählten Bereichen ein abweichendes Muster oder einen Schriftzug oder eine Markenzeichnung einzubringen. Auf diese Art und Weise können auch Hersteller, Herkunftsbezeichnungen oder individualisierte Kennungen in einfacher Art dauerhaft auf den Schaumkunststoff-Schuheinlegesohlen-Rohling aufgebracht werden. Besonders für den Bereich der Personalisierung von Schuheinlegesohlen ergeben sich hier vielfältige Möglichkeiten einer dauerhaften und abriebfesten Beschriftung.

Bisher wurden bei der Anwendung des an sich in der Technik bekannten Sublimationsdruck-Verfahrens nur Träger-Kunststoffe verwendet, welche entweder aus Polyester bestehen oder mit einer (zusätzlichen) Polyesterschicht versehen sind, da das Sublimationsdruckverfahren am geeignetsten mit einer solchen Polyesteroberfläche ausgeführt wird. So wird beispielsweise beim Bedrucken von T-Shirts die Baumwolle vor dem Aufbringen der Sublimationsfarbe zuerst mit Polyester beschichtet, damit die Farbe später gut am T-Shirt anhaftet. Gelegentlich kommen Fasern aus Polyamid, Polyacrylnitril und Zelluloseacetat in Frage, welche aber im Vergleich zu Polyester nicht bevorzugt sind. Andere Trägerstoffe, wie sie beispielsweise bei der Schuheinlegesohlen-Herstellung eingesetzt werden, wie Leder, Lederimitate, Kork, Vliese und dergleichen, müssen vor dem Bedrucken bevorzugt mit Polyester beschichtet werden. Dies ist Vergleich zur vorliegenden Erfindung ein zusätzlicher Verfahrensschritt, welcher das Bedrucken von Schuheinlegesohlen-Rohlingen im Vergleich zur Erfindung unwirtschaftlicher macht.

Das erfindungsgemäße Verfahren zum Bedrucken von Schuheinlegesohlen-Rohlingen für die Erstellung eines erfindungsgemäßen Schaumkunststoff-Schuheinlegesohlen-Rohlings der mittels Thermotransferdruckverfahren bedruckt ist, wird bevorzugt bei Schaumkunststoff-Schuheinlegesohlen-Rohlingen angewendet, welche weiter bevorzugt aus PU-Schaum, oder aus EVA-Schaum in einem Schäumverfahren, weiter bevorzugt im RIM-Verfahren, hergestellt wurden.

Die erfindungsgemäßen Schaumkunststoff-Schuheinlegesohlen-Rohlinge können dabei in Schäumformen erzeugt werden, deren Kavitäten eine annähernd fertige Schuheinlegesohlenform ausbilden, d.h. beispielsweise bereits ein Fußbett auf der Oberseite und/oder eine geeignet geformte Unterseite ausbilden, die beispielsweise an eine Schuhinnenform eines Schuhs, in den die fertige Schuheinlegsohle eingelegt werden soll, in Größe und Form angepasst ist. Die erfindungsgemäßen Schaumkunststoff-Schuheinlegesohlen-Rohlinge können jedoch auch als sogenannte durch Schäumen herstellte Fräsblöke darstellen, die nach den Schäumen durch beispielsweise Fräsen oder Schleifen bearbeitet werden müssen, um etwa ein Fußbett auf der Oberseite oder eine Schuhangepasstheit auf der Unterseite auszubilden. Bei beiden Arten von Rohlingen kann vor dem Thermobedrucken weiter bevorzugt auch eine beispielsweise orthopädische Anpassung durch einen Schuhorthopädiefachmann oder einen Orthopäden erfolgen. Erfindungsgemäß kann die bearbeitete Schaumkunststoffoberfläche, sei es die Oberseite und/oder die Unterseite, im Thermodruckverfahren ohne vorherige Beschichtung unmittelbar bedruckt werden, und so sowohl optisch als auch in der Oberflächengüte aufgewertet werden.

Für die erfindungsgemäßen Schaumkunststoff-Schuheinlegesohlen-Rohlinge ist es unerheblich, ob die zu bedruckende Oberfläche, sei es die Oberseite oder die Unterseite, direkt bzw. unmittelbar, d. h. unbearbeitet, nach dem Schäumen bedruckt wird oder vor dem Bedrucken mechanisch bearbeitet wurde und unmittelbar nach einem beispielsweise Fräsen oder Schleifen bedruckt wird. Analoges gilt für die Unterseite der erfindungsgemäßen Schaumkunststoff-Schuheinlegesohlen-Rohlinge, bei der beispielsweise eine Anpassung an eine Schuhinnenform eines Schuhs, in den der Rohling später einmal als Schuheinlegesohle eingelegt werden soll durch mechanischen Materialabtrag erfolgt. Erfindungsgemäß kann sowohl eine nach dem Schäumen unbearbeitete als auch eine nach dem Schäumen mechanisch bearbeitete Oberfläche der Unterseite direkt mittels Thermotransferdruckverfahren bedruckt werden.

Eine Anpassung an eine Schuhinnenform kann dabei schon in der Schäumform erfolgen, d. h. der aus der Schäumform herausgenommene Rohling zeigt an seiner Unterseite bereits eine Anpassung an eine Schuhinnenform, d. h. er ist in Größe und Ausgestaltung so ausgebildet, dass die Unterseite der fertigen Schuheinlegesohle ohne weitere Anpassung in einen Schuh passt. Hierbei ist nicht eine Angepasstheit an die Schuhinnenform eines konkreten Schuhs zwingend notwendig, sondern eine Angepasstheit an eine allgemeine Schuhinnenform, beispielsweise an eine z.B. genormte Schuhgröße. Die Anpassung der Unterseite des Rohlings an einen Schuh, d. h. an eine Schuhinnenform kann dabei auch maschinell durch Fräsen oder halbmanuell durch Schleifen erfolgen, sofern die angepasste Form nicht schon - wie oben bereit geschildert -in der Schäumform zumindest teilweise erzeugt wurde.

Zum Bedrucken der Unterseite mittels Thermotransferdruckverfahren ist die Unterseite bevorzugt aus PU-Schaumkunststoff, welcher weiter bevorzugt im RIM-Schäumverfahren aus einem Polyol und einem Cyanat erstellt. Auch bei Schaumkunststoff-Schuheinlegesolen-Rohlingen, welche aus EVA-Material geschäumt sind, ist das Thermotransferdruckverfahren erfindungsgemäß anwendbar.

Wurde die zu bedruckende Oberfläche vorher maschinell oder manuell durch Fräsen oder Schleifen bearbeitet, so ergibt sich durch das Thermotransferdruckverfahren ein weiterer Vorteil hinsichtlich der Oberflächenbeschaffenheit der bedruckten Fläche. Durch das Einbringen von Wärme auf die zu bedruckende Oberfläche werden Fräsriefen oder Schleifspuren abgemildert, d. h. egalisiert bzw. geglättet. Die nach dem Fräsen oder Schleifen deutlich sichtbaren Schleifspuren sind nach dem Bedrucken im Thermotransferdruckverfahren weitestgehend verschwunden, da sie bspw. überdeckt, verschmolzen bzw. abgemildert sind. Durch das Sublimationsdruckverfahren bzw. Thermotransferdruckverfahren wird auf der Schaumkunststoffoberfläche eine im Wesentlichen glatte Oberfläche erzeugt, welche auch die Poren des Schaumkunststoffes verschließt. Dadurch verbessert sich die Haptik, d. h. der Tragekomfort der Schuheinlegesohle, wodurch die Sohle mit der bedruckten Seite direkt mit dem Fuß des Trägers eines Schuhs in Berührung kommen kann. Durch die Ausbildung einer nahezu porenfreien Oberfläche verbessern sich auch die Hygieneeigenschaften der Schuheinlegesohle bzw. des Schuheinlegesohlen-Rohlings, da diese Oberfläche einfach gereinigt werden kann. Ein Festsetzen von ungewollten Verunreinigungen in den Poren des Schaumkunststoffs, speziell wenn dieser vor dem Bedrucken bearbeitet wurde, wird damit weitestgehend unterbunden. Das erfindungsgemäße Bedrucken von Schaumkunststoffeinlegesohlen-Rohlingen mittels Thermotransferdruckverfahren erzeugt somit eine Schutzschicht auf dem Schuheinlegesohlen-Rohling, welcher aus demselben PU-Schaumkunststoff bzw. geschäumten EVA-Material besteht, wie der geschäumte Körper des Schaumkunststoff-Schuheinlegesohlen-Rohlings. Dadurch ergibt sich auch eine gute Abriebfestigkeit des Dekors auf dem erfindungsgemäßen Schaumkunststoff-Schuheinlegesohlen-Rohling.

In einer weiteren Ausgestaltung der Erfindung wurde der Schaumkunststoff-Schuheinlegesohlen-Rohling vor dem Bedrucken, beispielsweise durch Fräsen und/oder Schleifen, auf der zu bedruckenden Oberfläche bearbeitet, da das Bedrucken mittels Thermotransferdruck eine glatte Oberfläche erzeugt. Mit anderen Worten, eine durch Fräsen oder Schleifen bearbeitete Oberfläche kann durch Bedrucken mittels Thermotransferdruck von der typischen Bearbeitungsrauhigkeit schnell und einfach befreit werden, ohne dass hierzu Feinschleif- oder gar Polierarbeiten notwendig sind. Gleichzeitig wird die Oberfläche durch das Thermotransferdrucken versiegelt und erhält obendrein noch eine ansprechende Ästhetik. Das erfindungsgemäße Bedrucken von Schaumkunststoff-Schuheinlegesohlen-Rohlinge mittels Thermotransferdruckverfahren erzeugt auch eine Schutzschicht auf dem Schuheinlegesohlen-Rohling, welcher bevorzugt aus PU-Schaumkunststoff bzw. geschäumtem EVA-Material besteht. Gleichzeitig werden Fräß- bzw. Schleifspuren oder offene Schaumkunststoff-typische Poren eingeebnet bzw. verschlossen. Damit kann die Feuchtigkeitsaufnahme des Schaumkunststoff-Schuheinlegesohlen-Rohlings deutlich reduziert werden.

Der zur Beschreibung verwendete Begriff Schaumkunststoff-Schuheinlegesohlen-Rohling ist dabei auch insofern als (fertige) Schuheinlegesohle zu verstehen, da bei geeigneter Ausbildung bzw. Anpassung des Schuheinlegesohlen-Rohlings dieser nach dem Bedrucken direkt in einen Schuh eingelegt werden kann. Ferner sind fertige Schaumkunststoff-Schuheinlegesohlen vom Erfindungsgedanken umfasst, bei denen der Schaumkunststoff-Schuheinlegesohlen-Rohling erst nach Anpassungen durch einen Orthopäden oder ähnlichen Fachleuten im Thermotransfer- bzw. Sublimationsdruck veredelt werden. Hierbei ist denkbar, dass der für einen Thermotransferdruck geeignete Schaumkunststoff-Schuheinlegesohlen-Rohling zusammen mit dem Thermotransferpapier an den Schuhorthopädiefachhandel ausgeliefert wird, jedoch die Bedruckung mit Thermotransferfarbe erst nach ggf. individueller Anpassung des Rohlings an einen Fuß des Trägers der Schuheinlegesohle erfolgt. In diesem Fall wird durch den Schuhorthopädiefachhandel eine Schaumkunststoff-Schuheinlegesohle fertiggestellt, welche die Merkmale des erfindungsgemäßen Schaumkunststoff-Schuheinlegesohlen-Rohlings aufweist.

Bevorzugt werden die erfindungsgemäßen Schaumkunststoff-Schuheinlegesohlen-Rohlinge mit einer Schäumform in einem Schäumvorgang ausgebildet, weiter bevorzugt im RIM-Verfahren, wobei die Schäumform beispielsweise an eine Schuhinnenform eines Schuhs, in den die Schuheinlegesohle eingelegt werden soll, weitestgehend angepasst ist. Beispielsweise weist die Schäumform eine der Schuhinnenform angenäherte Kavität auf, die die Ober- als auch die Unterseite der Schuheinlegesohle formt. Durch eine geeignete Formgebung kann so beispielsweise ein Fußbett für "normale" oder für typische Senk- oder Spreizfüße im Schäumverfahren ausgebildet werden, sodass der nach dem Schäumvorgang der Form entnehmbare Schaumkunststoff-Schuheinlegesohlen-Rohling beispielsweise nur noch bedruckt werden muss, um eine optisch ansprechende fertige Schuheinlegesohle auszubilden. D. h. nach dem Schäumvorgang kann ein Schaumkunststoff-Schuheinlegesohlen-Rohling der Schäumform entnommen werden, der für Standard-Schuheinlegesohlen eine bereits geeignete Form aufweist, und der nur noch im Sublimationsdruckverfahren bedruckt werden muss. Vom Erfindungsgedanken sind jedoch auch solche Rohlinge umfasst, welche beispielsweise durch einen Schuhorthopädiefachmann oder Orthopäden individuell durch Schleifen oder Fräsen an den Fuß eines Trägers angepasst werden kann, wobei das Bedrucken der Ober- und/oder Unterseite entweder bereits beim Hersteller der Schaumkunststoff-Schuheinlegesohlen-Rohlinge zumindest teilweise durchgeführt wurde oder dies vom Schuhorthopädiefachmann durchgeführt bzw. vervollständigt wird. So ist beispielsweise denkbar, dass bei einem Hersteller für Schaumkunststoff-Schuheinlegesohlen-Rohlinge ein annähernd an eine fertige Schuheinlegesohle geformter Schaumkunststoff-Schuheinlegesohlen-Rohling geschäumt wird und auf der Oberseite im Thermotransferverfahren bedruckt wird, wobei der Orthopädiefachmann nach individueller orthopädischer Anpassung der Unterseite diese mit Thermotransferfarbe bedruckt. Der Erfindungsgedanke umfasst dabei auch die vollständige Bedruckung von Ober- und/oder Unterseite durch den Orthopäden nach ggf. erfolgten Anpassarbeiten. Selbstredend ist von der Erfindung auch ein beim Hersteller der auf der Ober- und/oder Unterseite bereits bedruckter Schaumkunststoff-Schuheinlegesohlen-Rohlinge, der vom Schuhorthopädietechniker an individuelle Anforderungen eines Fußes noch angepasst werden muss, vom Erfindungsgedanken umfasst.

Weiter umfasst vom Erfindungsgedanken sind Schaumkunststoff-Schuheinlegesohlen-Rohlinge, die nur aus einer Schaumkunststoff-Materialhärte hergestellt sind, als auch solche, welche aus mehreren Schaumkunststoffen-Materialhärten bestehen, um beispielsweise unterschiedliche Materialhärten in den verschiedenen Fußbereichen bereitzustellen. So kann beispielsweise ein Fersenbereich eine andere Materialhärte aufweisen wie ein Mittelfußbereich, in dem beispielsweise ein Längsgewölbe in der Sohle ausgebildet ist. Weiter kann der Mittelfußbereich eine andere Materialhärte aufweisen als der Vorderfußbereich, welcher etwa unterhalb der Zehenwurzelknochen bis zur Sohlenspitze reicht. Bevorzugt - aber nicht darauf beschränkt - ist dabei der Fersenbereich im Allgemeinen härter ausgebildet als der Vorderfußbereich und weiter bevorzugt härter ausgebildet als der Mittelfußbereich, wobei der Mittelfußbereich im Allgemeinem härter ausgebildet ist als der Vorderfußbereich. Diese Härteangaben sind jedoch nur orientativ, da je nach individuellen Bedürfnissen der Träger der Schuheinlegesohle diese Härten angepasst werden können. Die unterschiedlichen Härten lassen sich beispielsweise über unterschiedliche Materialien oder durch unterschiedliche Mischungen einer Materialsorte erzeugen. Wie die einzelnen Materialhärten erzeugt werden, ist jedoch für die Ausführung der Erfindung unerheblich. Das erfindungsgemäße Thermotransfer-Bedrucken von Schaumkunststoff-Schuheinlegesohlen-Rohlingen kann sowohl bei weichen Schaumkunststoffen als auch bei harten Schaumkunststoffen eingesetzt werden.

In einer weiteren Ausführungsform weist beispielsweise der Fersenbereich im zentralen Bereich etwa unterhalb des Fersenbeins eine Ausnehmung auf, in welche der beispielsweise aus hartem Schaumkunststoffmaterial ausgebildete Fersenbereich mit weichem Schaumkunststoffmaterial aufgefüllt ist, welches beispielsweise auch für die Ausbildung des Vorderfußbereichs verwendet wird. Des Weiteren können in weiteren bevorzugten Ausführungsformen die Übergänge der Materialhärten zwischen den einzelnen Bereichen bevorzugt fließend ausgestaltet sein, damit unangenehme den Tragekomfort mindernde Kanten vermieden werden.

In einer weiteren Ausführungsform können auch Einlegeteile bzw. Kernteile zum Einsatz kommen, die vor dem Ausschäumen der Schaumkunststoff-Schuheinlegesohlen-Rohlinge in die Schäumform eingelegt und so vom Schaumkunststoff angeschäumt werden. Dabei ist es für die Ausführung der Erfindung unerheblich, ob das Kernteil nach dem Schäumen vom Schaumkunststoff umgeben ist oder das Kernteil nur in Teilbereichen mit Schaumkunststoff benetzt wird, so dass beispielsweise eine Außenseite des Kernteils, die der Oberseite der Schuheinlegesohlen-Rohlinge abgewandt ist, die Unterseite der Schuheinlegesohle bzw. des Schuheinlegesohlen-Rohlings ausbildet. Die Außenseite des Kernteils ist in einer weiteren bevorzugten Ausgestaltung bereits an eine Schuhinnenform angepasst, so dass der Schuheinlegesohlen-Rohling bzw. die Schuheinlegesohle in einen Schuh eingelegt werden kann, nachdem der Rohling beispielsweise vor und/oder nach einer mechanischen Bearbeitung bedruckt wurde und ohne dass das Kernteil auf der Außenseite bearbeitet werden muss.

Wie bereits beschrieben, kann ein Schaumkunststoff-Schuheinlegesohlen-Rohling nach dem Bedrucken, beispielsweise der Oberseite, direkt in einen Schuh eingelegt werden, so dass der bedruckte Schaumkunststoff-Schuheinlegesohlen-Rohling eine Schaumkunststoff-Schuheinlegesohle bildet. In einer weiteren bevorzugten Ausführung kann ein solcher Schuheinlegesohlen-Rohling auch mit einer Decke auf der Oberseite versehen werden, welche beispielsweise eine zusätzliche Wärmeisolation für den Fuß des Trägers des Schuhs bereitstellt, in den die Schuheinlegesohle eingelegt werden soll. Falls eine solche Ausgestaltung eines mit einer Decke versehenen Rohlings gewünscht ist, ist die Unterseite bevorzugt die Seite, welche mittels Thermotransferdruckverfahren dekorativ aufwertet und dabei versiegelt wird.

Selbstredend sind vom Erfindungsgedanken alle Farben und Muster auf einen Schuheinlegesohlen-Rohling mittels Thermodruckverfahren aufbringbar, welche geeignet sind, den Roheindruck eines Rohlings in Richtung einer fertigen Sohle zu verbringen. Da das Thermotransferdruckverfahren gleichzeitig die Oberflächenqualität der bedruckten Fläche verbessert, wird auch in dieser Hinsicht eine Aufwertung der Qualität des Schuheinlegesohlen-Rohlings erreicht.

In den folgenden Figuren werden Ausführungsbeispiele für erfindungsgemäße Schuheinlegesohlen-Rohlinge beschrieben, welche jedoch den Erfindungsgedanken nicht einschränken. Dabei zeigen:
- Figur 1: eine mit einem Linienmuster bedruckte Oberseite eines erfindungsgemäßen Schaumkunststoff-Schuheinlegesohlen-Rohlings;
- Figur 2: den Schaumkunststoff-Schuheinlegesohlen-Rohling gemäß Figur 1 in einer Schnittdarstellung längs der Linie A-A;
- Figur 3: den Schaumkunststoff-Schuheinlegesohlen-Rohling gemäß Figur 1 in einer Schnittdarstellung gemäß der Schnittlinie B-B.
- Figur 4: eine weitere Ausgestaltung eines erfindungsgemäßen Schaumkunststoff-Schuheinlegesohlen-Rohling in einer Längsschnittdarstellung.

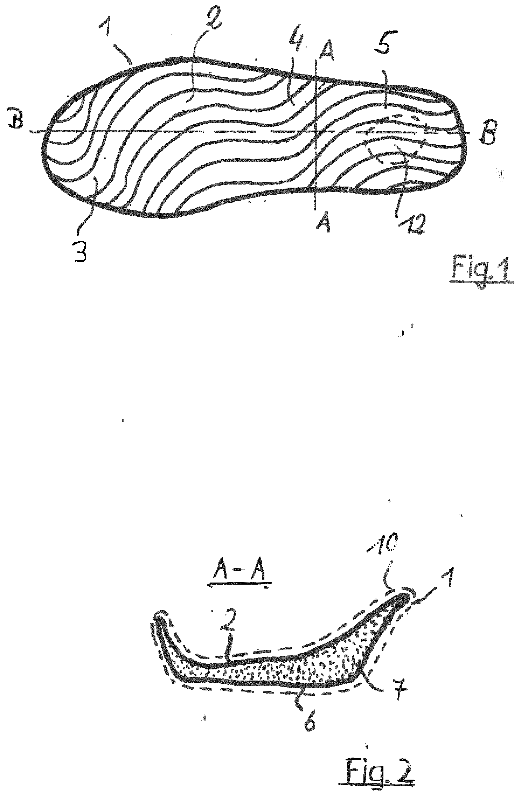

Figur 1 zeigt einen erfindungsgemäßen Schaumkunststoff-Schuheinlegesohlen-Rohling 1, dessen Oberseite 2 mittels Thermotransferdruckverfahren mit einem Linienmuster bedruckt wurde. Die gesamte Oberfläche der Oberseite 2 ist dabei mit einem Linienmuster versehen, wodurch der Schuheinlegesohlen-Rohling 1 gemäß der Erfindung ein dekorativ ansprechendes Erscheinungsbild aufweist. Vom Erfindungsgedanken ist weiter umfasst, dass auch die Unterseite 6 des Einlegesohlen-Rohlings 1 ebenfalls durch Thermotransferdruck aufgewertet wird oder im Rohzustand belassen wird. Speziell bei orthopädischen Schuheinlegesohlen-Rohlingen wird man jedoch die Unterseite 6 nicht bedrucken, da diese ggf. von einem Orthopädietechniker, beispielsweise durch Schleifen, an eine individuelle Fußform angepasst wird, wodurch die bedruckte Fläche zumindest in Teilbereichen entfernt werden würde. Selbstredend ist auch eine solche bedruckte Ausführungsform, d. h. auch wenn sie nachträglich von einem Orthopädietechniker bearbeitet wird, vom Erfindungsgedanken ebenfalls umfasst. Weiter umfasst ist auch nur eine nur teilweise Bedruckung der Oberseite 2 oder Unterseite 6 beispielsweise zur Hervorhebung von Pelotten oder speziell ausgebildeten Bereichen.

Weiter bevorzugt ist eine Ausführung vom Erfindungsgedanken umfasst, bei der der Schaumkunststoff-Schuheinlegesohlen-Rohling erst nach einer, ggf. individuellen, Anpassung der Oberseite 2 und/oder der Unterseite 6 durch einen Orthopäden oder Schuhorthopädietechniker mittels Thermotransferdruck bspw. im Orthopädiefachgeschäft bedruckt wird. In einem solchen Fall erstellt beispielsweise ein Orthopäde bzw. ein Schuhorthopädietechniker aus einem für die Thermotranferbedruckung geeigneten Schaumkunststoff-Schuheinlegesohlen-Rohling eine fertige Schaumkunststoff-Schuheinlegesohle, die in einen Schuh eingelegt werden kann. Eine derart fertiggestellte Schaumkunststoff-Schuheinlegesohle ist vom Erfindungsgedanken umfasst genauso umfasst, wie die oben beschriebenen bereits vor den Anpassarbeiten bedruckten Schaumkunststoff-Schuheinlegesohlen-Rohlinge.

In Figur 2 ist in einem Schnitt quer zur Längsrichtung des erfindungsgemäßen Schaumkunststoff-Schuheinlegesohlen-Rohlings dargestellt, dass der Schaumkunststoff 7 eines Schaumkunststoff-Schuheinlegesohlen-Rohlings 1 sowohl auf der Oberseite 2 als auch auf der Unterseite 6 der Schaumkunststoffeinlegesohle bzw. des Rohlings 1 bedruckt sein kann. Wie weiter in Figur 2 ersichtlich, kann der Schaumkunststoff-Schuheinlegesohlen-Rohling 1 allseitig im Sublimationsdruckverfahren bedruckt werden, da die Übergänge von Oberseite 2 zur Unterseite 6 (Außenseite) fließend sind. In Figur 2 ist der bedruckbare Bereich 10 daher als umlaufende gestrichelte Linie dargestellt.

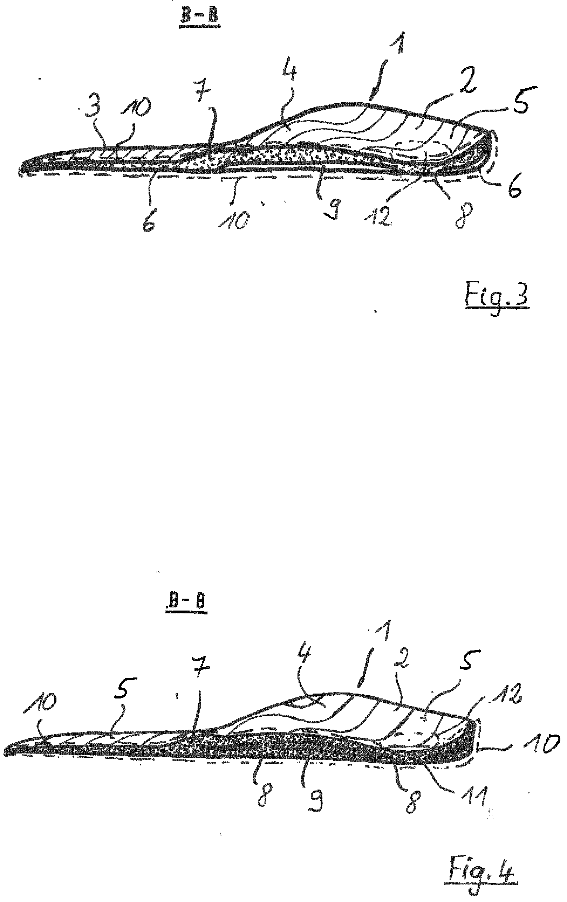

Der in Figur 3 dargestellte Rohling zeigt ein an der Unterseite angeordnetes Kernteil 9, welches gleichzeitig die Unterseite 6 des Schuheinlegesohlen-Rohlings 1 mitausbildet. Das in Figur 3 gezeigte Kernteil bzw. Unterteil 9 des Schuheinlegesohlen-Rohlings 1 ist dabei im Wesentlichen vom Fersenbereich 5 bis in den Mittelfußbereich 4 ausgebildet, wodurch der Vorderfußbereich 3 sowohl fußseitig als auch sohlenseitig aus weichem Schaumkunststoffmaterial gebildet werden kann.

Im Längsschnitt des in Figur 3 dargestellten Schaumkunststoff-Schuheinlegesohlen-Rohlings 1 erkennt man neben dem vom Fersenbereich 5 bis in den Mittelfußbereich 4 angeordneten Kernteil eine Ausnehmung 8 im Fersenbereich 5 des Kernteils 9, welche Ausnehmung 8 mit Schaummaterial gefüllt ist, wodurch eine bessere Dämpfung der Ferse erreicht wird. Das diesen Dämpfungsbereich 11 umgebende Kernteil 9 kann dann beispielsweise für die stützende Aufnahme des Fußes ausgebildet sein, insbesondere durch die dadurch ausgebildete Fersenmulde 12 (vgl. hierzu auch gestrichelte Linie in Figur 1). Speziell diese Fersenmulde 12 kann durch Auffüllung der Aussparung 8 mit weichem Schaumkunststoff 7 vertikale Kräfte abdämpfen, wobei das insbesondere formsteife Kernteil 9 den Fuß in horizontalen Richtungen führt. Insbesondere kann das Kernteil 9 als Spritzgussformteil dreidimensional ausgebildet sein, damit es die Anforderungen an die Stützung des Fußes und Stabilisierung des dämpfenden Schaumkunststoffes erfüllen kann.

In Figur 4 ist ein weiteres Ausführungsbeispiel dargestellt, das ein innenliegendes Kernteil 9 mit Ausnehmungen 8 zeigt, wobei sowohl die Oberseite 2 als auch die Unterseite 6 von Schaumkunststoffmaterial 7 gebildet sind. Die Form des Fußbettes auf der Oberseite 2 und/oder die Form der Unterseite 6 können dabei durch Schäumen in einer Schäumform ausgebildet worden sein oder durch Fräsen und Schleifen zum Erzielen einer beispielsweise individuellen Schuheinlage.

Insgesamt wird mit dem erfindungsgemäßen Schaumkunststoff-Schuheinlegesohlen-Rohling ein nicht nur optisch aufgewerteter Rohling bereitgestellt, sondern auch ein in seiner Oberflächengüte verbesserter Rohling, der beispielsweise bei Bedrucken mittels Thermotransferdruckverfahren auf der Oberseite, auf der bevorzugt ein Fußbett ausgebildet ist, nicht mehr mit einer Decke versehen werden muss, welche herkömmlich aufgebracht wird, um ein angenehmes Tragegefühl für den Träger einer Schuheinlegesohle bereitzustellen. Der erfindungsgemäße Schaumkunststoff-Schuheinlegesohlen-Rohling stellt somit eine wirtschaftliche und optisch ansprechende Alternative zu beispielsweise schichtweise aufgebauten Schuheinlegesohlen dar und ist einfach herstellbar. Durch die Veredelung der Oberfläche, die mittels des Thermotransferdruckverfahrens bedruckt wurde, entsteht eine hochabriebfeste, robuste Oberfläche, welche zudem optisch ansprechend ist.

### Bezugszeichenliste

- 1: Schaumkunststoff-Schuheinlegesohlen-Rohling
- 2: Oberseite
- 3: Vorderfußbereich
- 4: Mittelfußbereich
- 5: Fersenbereich
- 6: Unterseite
- 7: Schaumkunststoff
- 8: Ausnehmung
- 9: Kernteil
- 10: bedruckbarer Bereich
- 11: Dämpfungsbereich
- 12: Fersenmulde

## Patentansprüche

1. Schaumkunststoff-Schuheinlegesohlen-Rohling (1), mit einer Oberseite (2), die als Fußbett ausgebildet ist, und einer schuhinnenformangepassten Unterseite (6), wobei die Oberseite (2) und/oder die Unterseite (6) durch den Schaumkunststoff (7) ausgebildet ist, **dadurch gekennzeichnet,**
**dass** der Schaumkunststoff-Schuheinlegesohlen-Rohling nach einem formgebenden Herstellungsprozess unmittelbar mittels Thermotransferdruckverfahren bedruckt ist.

2. Schaumkunststoff-Schuheinlegesohlen-Rohling (1) nach Anspruch 1, wobei der Rohling im RIM-Schäumverfahren aus einem Polyol und einem Cyanat hergestellt ist.

3. Schaumkunststoff-Schuheinlegesohlen-Rohling (1) nach Anspruch 1, wobei der Rohling aus EVA-Material geschäumt ist.

4. Schaumkunststoff-Schuheinlegesohlen-Rohling (1) nach einem der vorangegangenen Ansprüche, welcher ein vor dem Thermotransferdrucken durch Fräsen und/oder Schleifen erzeugtes Fußbett aufweist.

5. Schaumkunststoff-Schuheinlegesohlen-Rohling (1) nach einem der Ansprüche 1 bis 4, welcher ein durch Schäumen erzeugtes Fußbett aufweist.

6. Schaumkunststoff-Schuheinlegesohlen-Rohling (1) nach einem der Ansprüche 1 bis 5, welcher eine vor dem Thermotransferdrucken durch Fräsen und/oder Schleifen erzeugte schuhinnenformangepasste Unterseite (6) aufweist.

7. Schaumkunststoff-Schuheinlegesohlen-Rohling (1) nach Anspruch 6, welcher eine durch Schäumen erzeugte schuhinnenformangepasste Unterseite (6) aufweist.

8. Schaumkunststoff-Schuheinlegesohlen-Rohling (1) nach einem der vorangegangenen Ansprüche, bei dem auf der Unterseite (6) ein Kernteil (9) angeordnet ist, das mit Schaumkunststoff (7) angeschäumt ist und zumindest teilweise die Unterseite (6) des Rohlings bildet.

9. Schaumkunststoff-Schuheinlegesohlen-Rohling (1) nach Anspruch 8, bei dem das Kernteil (9) aus Schaumkunststoff (7) hergestellt ist und eine der Oberseite (2) des Rohlings abgewandte Außenseite des Kernteils (9) schuhinnenformangepasst ist.

10. Schaumkunststoff-Schuheinlegesohlen-Rohling (1) nach Anspruch 8 oder 9, bei dem das Kernteil (9) in einem Fersenbereich (5) eine Ausnehmung (8) aufweist, die mit im Vergleich zum Kernteil (9) weicherem Material ausgeschäumt ist.

11. Schaumkunststoff-Schuheinlegesohlen-Rohling (1) nach einem der vorangegangenen Ansprüche, der einen Fersenbereich (5), einen Mittelfußbereich (4) und einen Vorderfußbereich (3) aufweist, die unterschiedliche Shore-Härten aufweisen.

12. Schaumkunststoff-Schuheinlegesohlen-Rohling (1) nach Anspruch 11, der im Fersenbereich (5) eine höhere Shore-Härte aufweist als im Mittelfußbereich (4) und/oder im Vorderfußbereich (3).

13. Schaumkunststoff-Schuheinlegesohlen-Rohling (1) nach einem der vorangegangenen Ansprüche, der auf der Oberseite (2) zumindest in Teilbereichen mit einer Decke bezogen ist.

14. Schaumkunststoff-Schuheinlegesohlen-Rohling (1) nach einem der vorangegangenen Ansprüche, der nach einem orthopädischen Anpassen der Oberseite und/oder einem Anpassen der Unterseite an eine Schuhinnenform als Schaumkunststoff-Schuheinlegesohle in einen Schuh einlegbar ist.

15. Verfahren zum Herstellen von bedruckten Schaumkunststoff-Schuheinlegesohlen mit den folgenden Schritten:
- Aufschäumen eines Schaumkunststoff-Schuheinlegesohlen-Rohlings mit einer aus Schaumkunststoff ausgebildeten Oberseite und/oder einer aus Schaumkunststoff ausgebildeten Unterseite;
- Ausbilden und/oder Anpassen eines orthopädischen Fußbettes auf der Oberseite des Schaumkunststoff-Schuheinlegesohlen-Rohlings;
- anschließendes Bedrucken der Oberseite und/oder Unterseite im Thermotransferdruckverfahren.

16. Verfahren nach Anspruch 15, bei dem die Unterseite des Schaumkunststoff-Schuheinlegesohlen-Rohlings an eine Schuhinnenform eines Schuhs, in den der Rohling als Schuheilegesohle eingelegt werden soll, angepasst wird.

17. Verfahren nach Anspruch 16, bei dem die Schaumkunststoff-Unterseite unmittelbar im Thermotransferdruckverfahren bedruckt wird.

## Claims

1. Foam-plastic shoe insole blank (1), with an upper side (2), which is formed as a footbed, and an underside (6), which is adapted to the inner shape of the shoe, the upper side (2) and/or the underside (6) being formed by the foam plastic (7), **characterized**
**in that**, after a shaping production process, the foam-plastic shoe insole blank is printed on directly by means of a thermal transfer printing method.

2. Foam-plastic shoe insole blank (1) according to Claim 1, the blank being produced by the RIM foaming process from a polyol and a cyanate.

3. Foam-plastic shoe insole blank (1) according to Claim 1, the blank being foamed from EVA material.

4. Foam-plastic shoe insole blank (1) according to one of the preceding claims, which has a footbed produced before the thermal transfer printing by milling and/or grinding.

5. Foam-plastic shoe insole blank (1) according to one of Claims 1 to 4, which has a footbed produced by foaming.

6. Foam-plastic shoe insole blank (1) according to one of Claims 1 to 5, which has an underside (6) adapted to the inner shape of the shoe, produced before the thermal transfer printing by milling and/or grinding.

7. Foam-plastic shoe insole blank (1) according to Claim 6, which has an underside (6) adapted to the inner shape of the shoe, produced by foaming.

8. Foam-plastic shoe insole blank (1) according to one of the preceding claims, in which a core part (9) is arranged on the underside (6), being moulded on by foaming with foam plastic (7) and at least partially forming the underside (6) of the blank.

9. Foam-plastic shoe insole blank (1) according to Claim 8, in which the core part (9) is produced from foam plastic (7) and an outer side of the core part (9) that is facing away from the upper side (2) of the blank is adapted to the inner shape of the shoe.

10. Foam-plastic shoe insole blank (1) according to Claim 8 or 9, in which the core part (9) has in a heel region (5) a recess (8), which is filled by foaming with a material that is softer than that of the core part (9).

11. Foam-plastic shoe insole blank (1) according to one of the preceding claims, which has a heel region (5), a midfoot region (4) and a forefoot region (3), which have different Shore hardnesses.

12. Foam-plastic shoe insole blank (1) according to Claim 11, which has a higher Shore hardness in the heel region (5) than in the midfoot region (4) and/or in the forefoot region (3).

13. Foam-plastic shoe insole blank (1) according to one of the preceding claims, which is covered at least in partial regions on the upper side (2) with an overlay.

14. Foam-plastic shoe insole blank (1) according to one of the preceding claims, which, after an orthopaedic adaptation of the upper side and/or an adaptation of the underside to an inner shape of the shoe, can be inserted into a shoe as a foam-plastic shoe insole.

15. Method for producing printed foam-plastic shoe insoles comprising the following steps:
- foaming a foam-plastic shoe insole blank with an upper side, formed from foam plastic, and/or an underside, formed from foam plastic;
- forming and/or adapting an orthopaedic footbed on the upper side of the foam-plastic shoe insole blank;
- then printing on the upper side and/or underside by the thermal transfer printing method.

16. Method according to Claim 15, in which the underside of the foam-plastic shoe insole blank is adapted to the inner shape of a shoe into which the blank is to be inserted as a shoe insole.

17. Method according to Claim 16, in which the foam plastic underside is printed on directly by the thermal transfer printing method.

## Revendications

1. Ebauche de semelle de chaussure en matière synthétique expansée (1), avec un côté supérieur (2), qui forme une assise du pied, et un côté inférieur (6) adapté à la forme intérieure de la chaussure, dans laquelle le côté supérieur (2) et/ou le côté inférieur (6) est formé par la matière synthétique expansée (7), **caractérisée en ce que** l'ébauche de semelle de chaussure en matière synthétique expansée est imprimée directement par un procédé d'impression à transfert thermique après un procédé de fabrication de mise en forme.

2. Ebauche de semelle de chaussure en matière synthétique expansée (1) selon la revendication 1, dans laquelle l'ébauche est fabriquée en un polyol et un cyanate par le procédé RIM.

3. Ebauche de semelle de chaussure en matière synthétique expansée (1) selon la revendication 1, dans laquelle l'ébauche est expansée en matière EVA.

4. Ebauche de semelle de chaussure en matière synthétique expansée (1) selon l'une quelconque des revendications précédentes, qui présente une assise du pied produite par fraisage et/ou meulage avant l'impression par transfert thermique.

5. Ebauche de semelle de chaussure en matière synthétique expansée (1) selon l'une quelconque des revendications 1 à 4, qui présente une assise du pied produite par expansion.

6. Ebauche de semelle de chaussure en matière synthétique expansée (1) selon l'une quelconque des revendications 1 à 5, qui présente un côté inférieur (6) adapté à la forme intérieure de la chaussure produit par fraisage et/ou meulage avant l'impression par transfert thermique.

7. Ebauche de semelle de chaussure en matière synthétique expansée (1) selon la revendication 6, qui présente un côté inférieur (6) adapté à la forme intérieure de la chaussure produit par expansion.

8. Ebauche de semelle de chaussure en matière synthétique expansée (1) selon l'une quelconque des revendications précédentes, dans laquelle une pièce de noyau (9) est disposée sur le côté inférieur (6), laquelle est expansée avec la matière synthétique expansée (7) et forme au moins partiellement le côté inférieur (6) de l'ébauche.

9. Ebauche de semelle de chaussure en matière synthétique expansée (1) selon la revendication 8, dans laquelle la pièce de noyau (9) est fabriquée en matière synthétique expansée (7) et un côté extérieur de la pièce de noyau (9) détourné du côté supérieur (2) de l'ébauche est adapté à la forme intérieure de la chaussure.

10. Ebauche de semelle de chaussure en matière synthétique expansée (1) selon la revendication 8 ou 9, dans laquelle la pièce de noyau (9) présente dans la région du talon (5) un évidement (8), qui est rempli par expansion avec une matière plus souple par comparaison avec la matière de la pièce de noyau (9).

11. Ebauche de semelle de chaussure en matière synthétique expansée (1) selon l'une quelconque des revendications précédentes, qui présente une région de talon (5), une région moyenne du pied (4) et une région avant du pied (3), qui présentent des duretés Shore différentes.

12. Ebauche de semelle de chaussure en matière synthétique expansée (1) selon la revendication 11, qui présente dans la région du talon (5) une dureté Shore plus élevée que dans la région moyenne du pied (4) et/ou dans la région avant du pied (3).

13. Ebauche de semelle de chaussure en matière synthétique expansée (1) selon l'une quelconque des revendications précédentes, qui est recouverte d'une couverture sur le côté supérieur (2), au moins dans des régions partielles.

14. Ebauche de semelle de chaussure en matière synthétique expansée (1) selon l'une quelconque des revendications précédentes, qui peut être introduite dans une chaussure comme semelle de chaussure en matière synthétique expansée après une adaptation orthopédique du côté supérieur et/ou une adaptation du côté inférieur à une forme intérieure de chaussure.

15. Procédé de fabrication de semelles de chaussure imprimées en matière synthétique expansée, comportant les étapes suivantes:
- expansion d'une ébauche de semelle de chaussure en matière synthétique expansée avec un côté supérieur formé de matière synthétique expansée et/ou un côté inférieur formé de matière synthétique expansée;
- formation et/ou adaptation d'une assise du pied sur le côté supérieur de l'ébauche de semelle de chaussure en matière synthétique expansée;
- ensuite impression du côté supérieur et/ou du côté inférieur par le procédé d'impression à transfert thermique.

16. Procédé selon la revendication 15, dans lequel on adapte le côté inférieur de l'ébauche de semelle de chaussure en matière synthétique expansée à une forme intérieure de chaussure d'une chaussure, dans laquelle l'ébauche doit être introduite comme semelle de chaussure.

17. Procédé selon la revendication 16, dans lequel on imprime le côté inférieur en matière synthétique expansée directement par le procédé d'impression à transfert thermique.
